# EUROPÄISCHE PATENTSCHRIFT

(11) **EP 1 612 116 B1**
(45) Veröffentlichungstag und Bekanntmachung des Hinweises auf die Patenterteilung: **30.07.2008**
(21) Anmeldenummer: 05013954.2
(22) Anmeldetag: 28.06.2005
(51) Int. Cl.: B61B 10/02, B65G 17/00

(54) **Fördervorrichtung mit einem Transportwagen mit fluchtenden Laufrollen**
Conveying device comprising a transport cart having floating rollers
Dispositif de convoyage comprenant un chariot de transport avec des galets de roulement flottantes

(30) Priorität: 29.06.2004 DE 102004031443
(43) Veröffentlichungstag der Anmeldung: 04.01.2006
(73) Patentinhaber: Bosch Rexroth Aktiengesellschaft, 70184 Stuttgart (DE)
(72) Erfinder: Leisner, Ernst, 71638 Ludwigsburg (DE); Porzer, Volker, 73666 Baltmannsweiler (DE); Ludwig, Peter, 72072 Tübingen (DE)
(74) Vertreter: Herzog, Markus

(56) Entgegenhaltungen:
- EP-A- 0 123 173
- DE-A1- 19 517 276
- US-A- 3 646 656
- US-A- 5 473 880
- US-A- 5 718 320
- US-B1- 6 533 106

## Beschreibung

Die Erfindung betrifft eine Fördervorrichtung umfassend einen Transportweg, welcher wenigstens einen gekrümmten Abschnitt mit einer Krümmungsachse und einem Krümmungsradius aufweist, wobei diesem Transportweg eine längs des Transportwegs weisende Förder- bzw. Längsrichtung, eine parallel zur Krümmungsachse verlaufende Hochrichtung und eine sowohl zur Förderrichtung als auch zur Hochrichtung orthogonal verlaufende Querrichtung zuordenbar sind, wobei der Transportweg ferner zwei in Hochrichtung übereinander und mit einem vorbestimmten Abstand voneinander verlaufende Laufbahnen aufweist, und ferner umfassend einen Transportwagen mit wenigstens drei Rollen, wobei jeder der Laufbahnen wenigstens eine Laufrolle mit im Wesentlichen in Hochrichtung verlaufender Drehachse zugeordnet ist, und wobei wenigstens einer der Laufbahnen eine weitere Laufrolle mit im Wesentlichen in Hochrichtung verlaufender Drehachse zugeordnet ist, welche von der derselben Laufbahn zugeordneten einen Laufrolle in Förderrichtung beabstandet angeordnet ist.

Bereits an dieser Stelle sei darauf hingewiesen, dass insbesondere die Bezeichnung "Hochrichtung", aber auch die anderen Orientierungsangaben, ihre Gültigkeit auch dann behalten, wenn der Transportweg relativ zur Horizontalen unter einem vorbestimmten Winkel geneigt verläuft. In diesem Fall verläuft dann auch die "Hochrichtung" nicht exakt in Richtung der Vertikalen, sondern schließt mit dieser den vorbestimmten Winkel ein. Darüber hinaus sei festgehalten, dass die Förderrichtung in gekrümmten Abschnitten des Transportwegs in Richtung der Tangente am jeweils betrachteten Ort des Transportwegs verläuft.

Eine gattungsgemäße Fördervorrichtung ist beispielsweise aus der US 5,960,938, der US 6,062,378 und der US 6,237,755 B1 bekannt. Die bekannte Fördervorrichtung umfasst einen als Profilträger ausgebildeten Transportweg mit einer ersten Rollbahn, deren Oberfläche bezüglich der Horizontalen unter einem geringen Winkel geneigt verläuft, um die von Stützrollen übertragene Stützlast des Transportwagens aufzunehmen. Ferner sind zwei weitere Rollbahnen vorgesehen, von denen die eine im Wesentlichen vertikal verläuft und die andere mit der Vertikalen einen geringen Winkel einschließt. Über diese beiden Rollbahnen übertragen Laufrollen das von einer seitlich am Laufwagen angebrachten Last ausgeübte Drehmoment auf den Transportweg. Die beiden weiteren Rollbahnen sind nicht nur in Hochrichtung des Transportwegs, sondern auch in Querrichtung voneinander beabstandet. Insgesamt verfügt der Transportwagen über zwei derartige Rollen-Triplets, die in Längsrichtung des Transportwegs voneinander beabstandet sind.

In der Praxis hat sich gezeigt, dass der Transportwagen dieser bekannten Fördervorrichtung beim Durchfahren gekrümmter Abschnitte des Transportwegs, insbesondere beim Durchfahren von Kurven, Probleme hat. Und zwar nehmen diese Probleme umso mehr zu, je stärker die Krümmung des gekrümmten Wegabschnitts ist, d.h. je enger die Kurve ist. Wie man leicht einsieht, ist aber gerade der engstmögliche Kurvenradius maßgeblich dafür, wie viel Bauraum für eine Fördervorrichtung bereitgestellt werden muss.

Lediglich der Vollständigkeit halber sei noch auf die US 3,646,656 und die US 4,331,229 verwiesen.

Demgegenüber ist es Aufgabe der vorliegenden Erfindung, eine Fördervorrichtung der eingangs genannten Art bereitzustellen, bei welcher der Transportwagen auch enge und engste Kurven des Transportwegs ohne Weiteres durchfahren kann.

Diese Aufgabe wird erfindungsgemäß durch eine gattungsgemäße Fördervorrichtung gelöst, bei welcher die Drehachsen der beiden Laufrollen zueinander fluchtend angeordnet sind, und bei welcher dann, wenn beiden Laufbahnen jeweils eine weitere Laufrolle zugeordnet ist, die Drehachsen dieser beiden weiteren Laufrollen ebenfalls zueinander fluchtend angeordnet sind. Durch die fluchtende Anordnung der Drehachsen der Laufrollen laufen diese nicht nur in weiten Kurven, sondern auch in engen Kurven stets auf dem gleichen Radius.

Wie vorstehend bei der Diskussion des Standes der Technik bereits angedeutet wurde, verlaufen die Oberflächen der Laufbahnen im Wesentlichen in Hoch- und Förderrichtung, d.h. die Oberflächen-Normalen dieser beiden Laufbahnen verlaufen im Wesentlichen in Querrichtung, und zwar weisen sie vorzugsweise in einander entgegengesetzte Richtungen. Auf diese Weise ist es möglich, über die Laufrollen ein Drehmoment auf den Transportweg zu übertragen, das von einer seitlich am Transportwagen angeordneten Last herrührt. Zusätzlich kann wenigstens eine Stützrolle vorgesehen sein, welche vorzugsweise eine im Wesentlichen in Querrichtung verlaufende Drehachse aufweist, und mit einer im Wesentlichen in Quer-und Förderrichtung verlaufenden Rollbahn (Oberflächen-Normale in Hochrichtung) des Transportwegs in Rolleingriff steht. Über diese Stützrolle kann das Gewicht der Last und des Transportwagens auf den Transportweg übertragen werden. Dabei kann die wenigstens eine Stützrolle einer der Laufrollen als Nachlaufrolle zugeordnet sein.

Wenn die Drehachse der Stützrolle um eine im Wesentlichen in Hochrichtung, vorzugsweise zur Drehachse der zugeordneten Laufrolle im Wesentlichen parallel, verlaufende Achse schwenkbar ist, so stellt sich die Stützrolle selbsttätig immer tangential zur Krümmung des gekrümmten Abschnitts ein, was zu einer Reduzierung des Verschleißes an der Oberfläche der Stützrolle führt. Um im Bedarfsfall die Bewegungsrichtung des Transportwagens längs des Transportwegs umkehren zu können, kann die Stützrolle derart bemessen sein, dass sie auf der ihr zugeordneten Rollbahn um 360° verschwenken kann.

Eine hinsichtlich des erforderlichen Bauraums kompakte Bauweise, die es zudem ermöglicht, dem Transportwagen ein optisch ansprechendes Erscheinungsbild zu verleihen, kann beispielsweise dadurch erzielt werden, dass die Stützrolle derart bemessen ist, dass sie in Hochrichtung im Wesentlichen vollständig unterhalb der ihr zugeordneten Laufrolle anordenbar ist.

Wenigstens eine der Rollen kann beispielsweise als Scheibenrolle ausgebildet sein, d.h. als eine Rolle mit einer bezüglich des Rollenkörpers starren Drehachse, die in einer entsprechenden übergeordneten Lagerung drehbar gelagert ist. Zusätzlich oder alternativ ist es jedoch auch möglich, dass wenigstens eine der Rollen als Kugelrolle ausgebildet ist. In diesem Fall stellt sich die Drehachse in Folge des Rolleingriffs zwischen der Kugelrolle und der zugeordneten Rollbahn selbsttätig ein. Der Kugelrollenkörper kann beispielsweise in einem entsprechenden Pfannenkörper gelagert sein. Ist die Stützrolle als Kugelrolle ausgebildet, so ist die vorstehend erwähnte schwenkbare Anordnung aufgrund der Selbsteinstellung der Drehachse nicht erforderlich, was eine Bauraum sparendere Anordnung der Stützrolle ermöglicht. Insbesondere brauchen die Stützrollen dann, wenn der Transportwagen zwei Laufrollenpaare aufweist, die in Förderrichtung voneinander beabstandet sind, unabhängig von der Laufrichtung des Transportwagens längs des Transportwegs nicht außerhalb der beiden Laufrollenpaare angeordnet zu sein. Beispielsweise kann die Kugelrolle in Achsenflucht mit den beiden Laufrollen eines Laufrollenpaars angeordnet sein.

Bei einer als Scheibenrolle ausgebildeten Stützrolle kann die 360°-Verschwenkbarkeit bei gleichzeitiger Anordnung der Stützrolle in Hochrichtung unterhalb der ihr zugeordneten Laufrolle dadurch sichergestellt werden, dass die Stützrolle etwa den halben Durchmesser der zugeordneten Laufrolle aufweist.

In Weiterbildung der Erfindung wird vorgeschlagen, dass die beiden Laufbahnen an voneinander gesondert ausgebildeten Laufbahneinheiten ausgebildet sind. Hierdurch ist es möglich, ein und dieselbe Fördervorrichtung an die Belastung des jeweiligen Anwendungsfalles anzupassen. Wie vorstehend erwähnt, wird über die Laufrollen das Drehmoment der seitlich am Transportwagen vorgesehenen Last auf den Transportweg übertragen. Die Belastung, der die Laufrollen dabei widerstehen müssen, hängt von deren Abstand ab. Durch eine Vergrößerung dieses Abstands kann die auf dem Transportwagen transportierte Nutzlast bei gleicher Beanspruchung der Laufrollen erhöht werden. Diese Abstandsvergrößerung wird durch die Ausbildung der beiden Laufbahnen an voneinander gesonderten Laufbahneinheiten ermöglicht. Die beiden Laufbahneinheiten können dabei an einer gemeinsamen übergeordneten Montageeinheit befestigbar sein, beispielsweise vertikalen Stützelementen, die auf dem Boden einer Montagehalle oder dergleichen aufstehen.

In Weiterbildung der Erfindung wird vorgeschlagen, dass die Laufrollen beide von oben an dem bügelartigen Halterungselement gelagert sind. Diese Lagerung ermöglicht es nämlich in Verbindung mit einem nach oben offen ausgebildeten Profil des Transportwegs, den Transportwagen an jeder beliebigen Stelle des Transportwegs von oben auf den Transportweg aufzusetzen.

Die Erfindung wird im Folgenden anhand der beigefügten Zeichnung an einem Ausführungsbeispiel näher erläutert werden. Es stellt dar:
- Fig. 1: eine perspektivische Frontansicht einer erfindungsgemäßen Fördervorrichtung;
- Fig. 2: eine perspektivische Rückansicht der Fördervorrichtung gemäß Fig. 1 in Ansicht aus Richtung des Pfeils II in Fig.1;
- Fig. 3: eine Seitenansicht der Transportvorrichtung gemäß Fig. 1 in Ansicht aus Richtung des Pfeils III in Fig. 1;
- Fig. 4 und 5: perspektivische Ansichten zweier verschiedener Weichenstellungen einer Weichenanordnung der erfindungsgemäßen Fördervorrichtung; und
- Fig. 6: eine vergrößerte Teildraufsicht aus Richtung des Pfeils VI in Fig. 5 eines Stellmechanismus zum Verstellen beweglicher Weichenelemente.

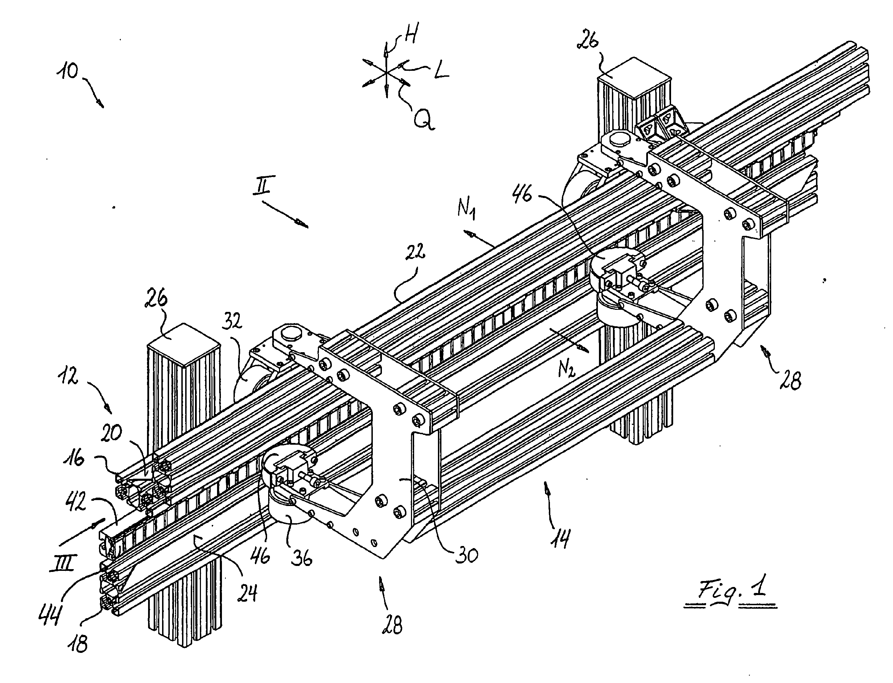

In Fig. 1 ist eine erfindungsgemäße Fördervorrichtung allgemein mit 10 bezeichnet. Sie umfasst einen Transportweg 12 und einen Transportwagen 14. Dabei versteht es sich von selbst, dass sich längs des Transportwegs 12 eine Vielzahl derartiger Transportwagen 14 bewegen kann.

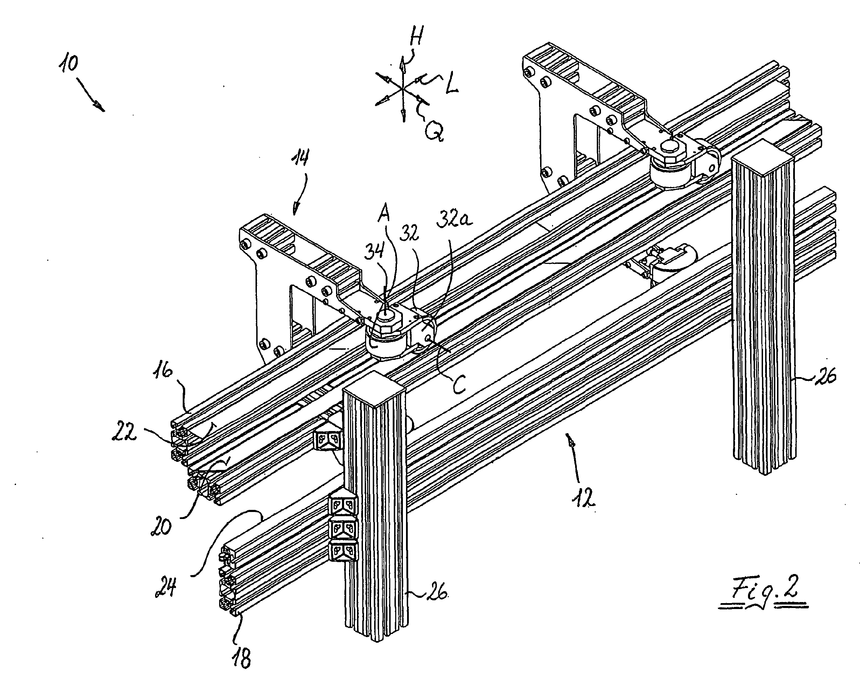

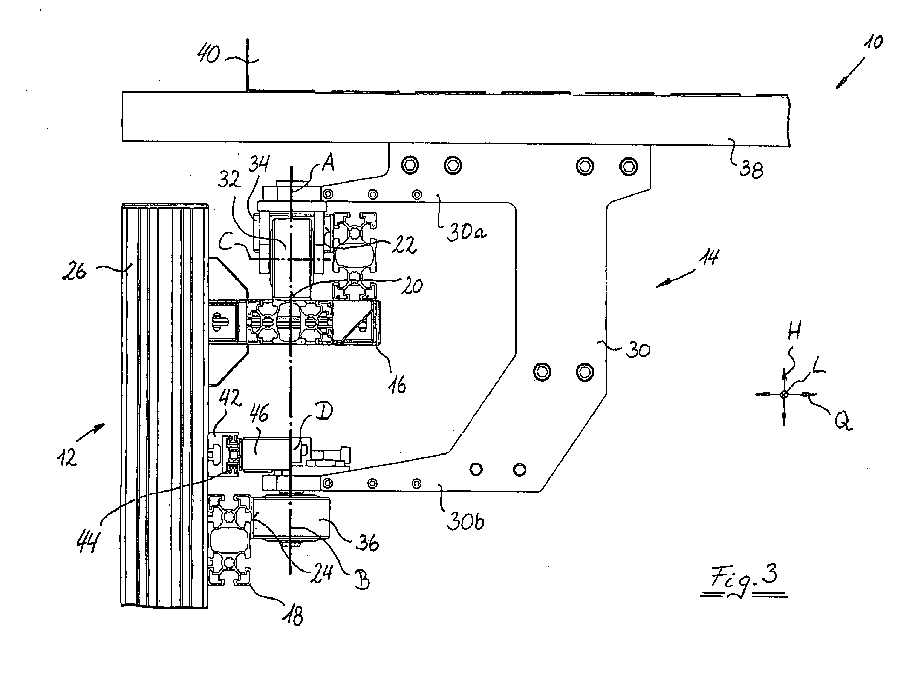

Der Transportweg 12 umfasst zwei voneinander getrennt ausgebildete Profilelementbaugruppen bzw. Transportwegeinheiten 16 und 18, an denen eine Mehrzahl von Bahnen 20, 22 und 24 vorgesehen sind (siehe auch Fig. 2 und 3), längs derer sich nachfolgend noch näher zu erläuternde Rollen des Transportwagens 14 bewegen können.

Der Transportwagen 14 umfasst zwei Rollenanordnungen 28, die in Längs- bzw. Förderrichtung L voneinander beabstandet angeordnet sind. Jede dieser Rollenanordnungen 28 umfasst eine bügelförmige Halterungseinheit 30, an der eine Stützrolle 32, eine obere Laufrolle 34 (siehe Fig. 2 und 3) und eine untere Laufrolle 36 (siehe auch Fig. 3) drehbar angeordnet sind. Wie in Fig. 3 dargestellt ist, ist auf den bügelförmigen Halterungseinheiten 30 zudem ein Transporttisch 38 angeordnet, auf welchem eine in Fig. 3 gestrichelt angedeutete Last 40 platziert werden kann.

Da die Last 40 über den Transportwagen 14 seitlich des Transportwegs 12 angeordnet ist, wird die von ihr ausgehende Gewichtslast zum größten Teil in Form eines vom Transportwagen 14 auf den Transportweg ausgeübten Drehmoments und zu einem geringen Teil auch in Form einer von dem Transportwagen 14 ausgeübten Gewichtskraft an den Transportweg 12 weitergeleitet.

Zur Weiterleitung des vorstehend genannten Drehmoments sind die an der oberen Transportwegeinheit 16 angeordnete Laufbahn 22 und die an der unteren Transportwegeinheit 18 angeordnete Laufbahn 24 beide mit einer in Hochrichtung H und Lämngsrichtung L verlaufenden Laufbahnfläche ausgebildet, wobei die obere Laufbahn 22 auf die Stützelemente 26 zu weist, während die untere Laufbahn 24 von den Stützelementen weg weist. D.h. die Flächennormalen N₁ und N₂ der Laufbahnen 22 und 24 verlaufen beide im Wesentlichen in Querrichtung Q, weisen aber in zueinander entgegengesetzten Richtungen.

Die diesen Laufbahnen 22 und 24 zugeordneten Rollen 34 und 36 des Transportwagens 14 verfügen dementsprechend über eine im Wesentlichen in Hochrichtung H verlaufende Drehachse A bzw. B. Da sich in Ansicht gemäß Fig. 3 die obere Laufrolle 34 von links gegen die Laufbahn 22 anlegt, während sich die untere Laufrolle 36 von rechts gegen die Laufbahn 24 anlegt, kann das von der Last 40 ausgehende, in Ansicht gemäß Fig. 3 im Uhrzeigersinn weisende Drehmoment ohne weiteres über die Rollen 34 und 36 auf die Laufbahnen 22 und 24 des Transportwegs 12 übertragen werden.

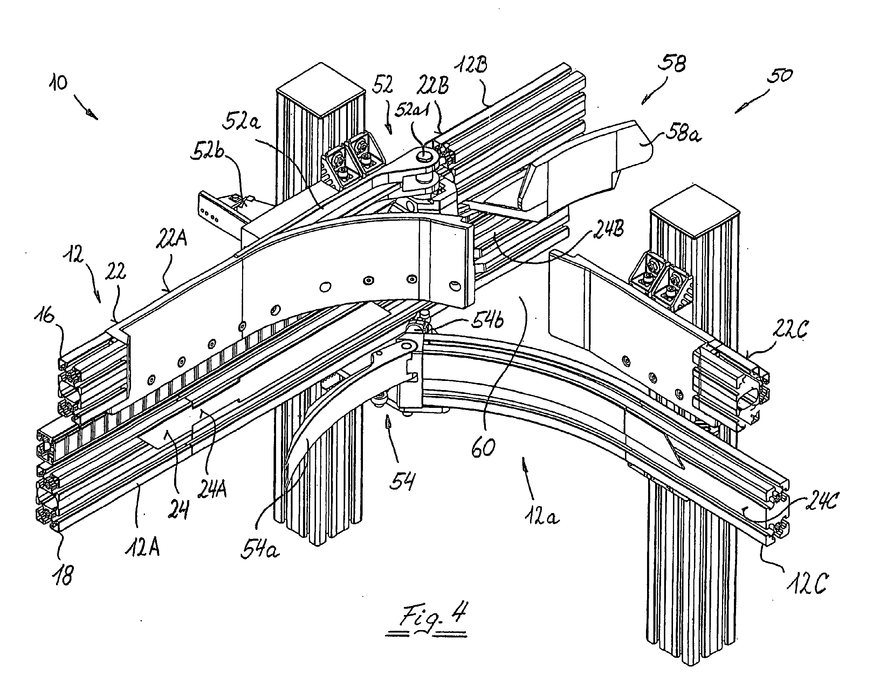

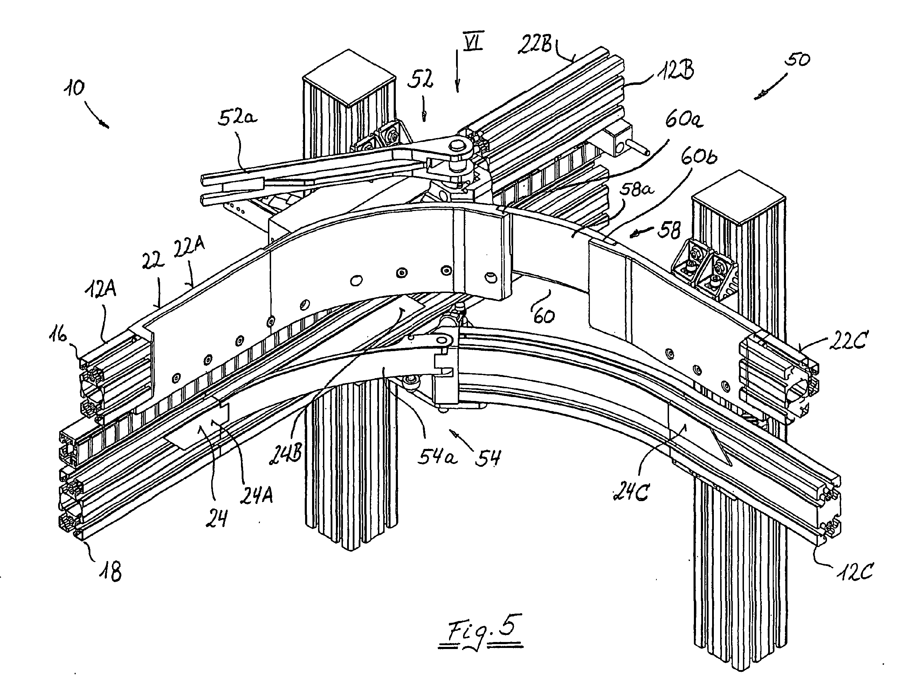

Ferner sind die beide Laufrollen 34, 36 jeweils von oben an der bügelartigen Halterungseinheit 30 gelagert, d.h. sie sind in Ansicht gemäß Fig. 3 jeweils unterhalb der Arme 30a und 30b der bügelartigen Halterungseinheit 30 angeordnet. Diese Lagerung ermöglicht es in Verbindung mit der nach oben offenen Ausbildung der oberen Transportwegeinheit 16, den Transportwagen 14 an jeder beliebigen Stelle des Transportwegs 12 von oben auf den Transportweg 12 aufzusetzen. Darüber hinaus ist darauf hinzuweisen, dass der untere Arm 30b der bügelartigen Halterungseinheit 30 vollständig oberhalb der unteren Transportwegeinheit 18 verläuft. Hieraus wird im Zusammenhang mit Fig. 4 und 5 nochmals eingegangen werden.

Die noch verbleibende Gewichtskraft der Last 40 wird über Stützrollen 32, welche eine im Wesentlichen in Querrichtung Q verlaufende Drehachse C haben, auf die neben der Längsrichtung L im Wesentlichen in Querrichtung Q verlaufende Stützbahn 20 der oberen Transportwegeinheit 16 übertragen.

Wie besonders gut in Fig. 2 zu erkennen ist, ist die Stützrolle 32 der zugehörigen oberen Laufrolle 34 jeweils als Nachlaufrolle zugeordnet, d.h. ein die Drehachse C der Stützrolle 32 drehbar lagerndes Lagerelement 32a ist seinerseits um die Drehachse A der Laufrolle 34 drehbar gelagert. An dieser Stelle sei darüber hinaus festgehalten, dass die Stützrolle 32, aber auch die Laufrollen 34 und 36, nicht nur als Scheibenrollen mit fester Drehachse, sondern auch als Kugelrollen ausgebildet sein können, deren jeweils tatsächliche Drehachse sich in Folge des Rolleingriffs mit der jeweiligen Rollbahn selbsttätig einstellt.

Erfindungsgemäß sind die obere Laufrolle 34 und die untere Laufrolle 36 derart am Transportwagen 14 angeordnet, dass ihre Drehachsen A und B zueinander fluchtend verlaufen, wie dies insbesondere aus Fig. 3 sehr gut zu ersehen ist. Aufgrund dieser fluchtenden Anordnung der Drehachse A und B in beiden Rollenanordnungen 28 des Transportwagens 14 verfügt der Transportwagen 14 in gekrümmten Abschnitten 12a des Transportwegs 12 (siehe beispielsweise Fig. 4) über hervorragende Kurvenfahreigenschaften, da sich beide Laufrollen, nämlich die obere Laufrolle 34 und die untere Laufrolle 36 in Folge der fluchtenden Anordnung ihrer Drehachsen A und B stets auf dem selben Kurvenradius bewegen. Es versteht sich von selbst, dass dies nicht nur für einen gekrümmten Streckenabschnitt 12a im Bereich einer Weichenanordnung 50 gilt, sondern ganz allgemein in gekrümmten Streckenabschnitten 12a, denen eine im Wesentlichen in Hochrichtung H verlaufende Krümmungsachse zugeordnet werden kann.

In den Fig. 4 und 5 ist ein mit einer Weichenanordnung 50 versehener Bereich des Transportwegs 12 der erfindungsgemäßen Fördervorrichtung 10 dargestellt. In der in Fig. 4 gezeigten Weichenstellung der Weichenanordnung 50 wird ein von einem Hauptpfad 12A des Transportwegs 12 her kommender Transportwagen 14 geradeaus zu einem ersten Nebenpfad 12B weitergeleitet, während er in der in Fig. 5 dargestellten Weichenstellung zu einem zweiten Nebenpfad 12C abbiegt. Entsprechend dem Hauptpfad 12A und den beiden Nebenpfaden 12B und 12C des Transportwegs 12 verfügt die an der oberen Transportwegeinheit 16 angeordnete obere Laufbahn 22 über einen Hauptabschnitt 22A und zwei Nebenabschnitte 22B und 22C, und verfügt die an der unteren Transportwegeinheit 18 angeordnete untere Laufbahn 24 über einen Hauptabschnitt 24A und zwei Nebenabschnitte 24B und 24C.

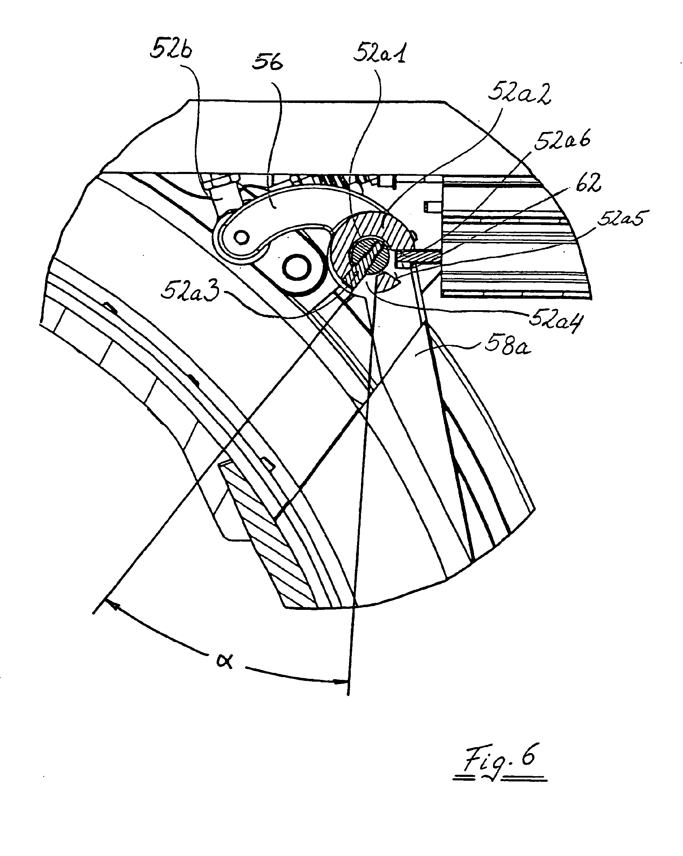

In der in den Fig. 4 und 5 dargestellten Ausführungsform ist jeder der beiden Laufbahnen 22 und 24 jeweils eine Weicheneinheit 52 und 54 zugeordnet, die jeweils über ein bewegliches Weichenelement 52a bzw. 54a und einen zugeordneten Stellantrieb 52b bzw. 54b, beispielsweise ein fluidisch betätigbares Zylinder-Kolben-Aggregat, verfügen. Die Stellantriebe 52b und 54b sind mit ihrem einen Ende gelenkig an der zugehörigen Transportwegeinheit 16 bzw. 18 angelenkt und sind mit ihrem jeweils anderen Ende an einem mit der Schwenkachse 52a1 des beweglichen Weichenelements 51a verbundenen Hebels 56 (siehe Fig. 6) bzw. unmittelbar an dem beweglichen Weichenelement 54a angelenkt.

Ferner ist der oberen Transportwegeinheit 16 bzw. der oberen Laufbahn 22 eine weitere Weicheneinheit 58 zugeordnet, deren bewegliches Weichenelement 58a in der in Fig. 4 dargestellten Weichenstellung eine in der Laufbahn 22 vorgesehene Durchtrittsöffnung 60 für die bügelförmige Halterungseinheit 30 des Transportwagens 14 freigibt, sodass sich der Transportwagen 14 problemlos vom Hauptpfad 12A des Transportwegs 12 zu dessen erstem Nebenpfad 12B bewegen kann. In der in Fig. 5 dargestellten Weichenstellung verschließt das bewegliche Weichenelement 58a hingegen die Durchtrittsöffnung 60 und sorgt für einen kontinuierlichen Verlauf der oberen Laufbahn 22 von dem Hauptpfad 12A des Transportwegs 12 zum zweiten Nebenpfad 12C.

In dieser Weichenstellung wird das bewegliche Weichenelement 58a von der oberen Laufrolle 34 des Transportwagens 14 gegen zwei an der oberen Laufbahn 22 ausgebildete Schulterabschnitte 60a und 60b der Durchtrittsöffnung 60 gedrängt, welche die von dem Drehmoment des Transportwagens 14 herrührenden Kräfte unmittelbar in die obere Transportwegeinheit 16 einleiten. Daher braucht der Stellantrieb 52b, der nicht nur für die Verstellung des beweglichen Weichenelements 52a der Weicheneinheit 52 sorgt, sondern gleichzeitig auch für die Verstellung des beweglichen Weichenelements 58a der weiteren Weicheneinheit 58 zuständig ist, den von dem Laufwagen 14 herrührenden Kräften nicht widerstehen zu können und kann daher entsprechend leistungsarm und mit geringer Baugröße ausgebildet sein.

In analoger Weise sind auch die beweglichen Weichenelemente 52a und 54a selbstverriegelnd ausgebildet. Und zwar legt sich das bewegliche Weichenelement 52a in der in Fig. 4 dargestellten, die Pfade 12A und 12B des Transportwegs 12 verbindenden Weichenstellung gegen den Hauptabschnitt 22A der oberen Laufbahn 22 an, während sich das bewegliche Weichenelement 54a in der in Fig. 5 dargestellten Weichenstellung, in welcher die Pfade 12A und 12C des Transportwegs 12 miteinander verbunden sind, gegen den Hauptabschnitt 24A der unteren Laufbahn 24 anlegt. In beiden Fällen werden die von der jeweiligen Laufrolle 34 bzw. 36 ausgeübten Kräfte unmittelbar in die obere Transportwegeinheit 16 bzw. die untere Transportwegeinheit 18 eingeleitet und brauchen somit nicht von den Stellantrieben 52b bzw. 54b aufgenommen zu werden.

Ferner ist darauf hinzuweisen, dass auf Grund der Tatsache, dass der untere Arm 30b der bügelartigen Halterungseinheit 30 vollständig oberhalb der unteren Transportwegeinheit 18 verläuft (siehe Fig. 3), in der unteren Transportwegeinheit 18 keine der Durchtrittsöffnung 60 der oberen Transportwegeinheit 16 entsprechende Durchtrittsöffnung mit zugehöriger Durchtritts-Weicheneinheit vorgesehen zu werden braucht.

Wie vorstehend bereits angedeutet wurde, ist den beiden beweglichen Weichenelementen 52a und 58a ein gemeinsamer Stellantrieb 52b zugeordnet. Nun entnimmt man aber einem Vergleich der Fig. 4 und 5 ohne Weiteres, dass der Schwenkwinkel, um den sich das bewegliche Weichenelement 52a um die Schwenkachse 52a1 drehen muss, um den oberen Laufrollen 34 des Transportwagens 14 den Durchtritt vom Hauptabschnitt 22A der oberen Laufbahn 22 zum Nebenabschnitt 22C zu ermöglichen, erheblich kleiner ist als der Schwenkwinkel, um den sich das bewegliche Weichenelement 58 um die Schwenkachse 52a1 drehen muss, um den bügelförmigen Halterungseinheiten 30 des Transportwagens 14 den Weg von dem Hauptpfad 12A des Transportwegs 12 zum Nebenpfad 12B zu ermöglichen.

In Fig. 6 ist eine mögliche Ausführungsform dargestellt, welche diese unterschiedlichen Schwenkwinkel bei Betätigung durch einen einzigen Stellantrieb 52b ermöglicht.

Die Schwenkachse 52a1 ist über einen Hebel 56 mit dem Stellantrieb 52b verbunden und kann mittels diesem über einen vorbestimmten Schwenkwinkel hin und her verschwenkt werden. Das bewegliche Weichenelement 58a ist mit dieser Schwenkachse 52a1 starr verbunden und macht somit die Schwenkbewegung der Schwenkachse 52a1 über deren gesamten Schwenkwinkel mit. Hingegen ist das bewegliche Weichenelement 52a über eine Lagerbuchse 52a2 auf der Schwenkachse 52a1 relativ zu dieser verdrehbar gelagert. Ein Stift 52a3, der mit der Schwenkachse 52a1 betriebsmäßig fest verbunden ist, greift in ein sich in Umfangsrichtung der Lagerhülse 52a2 erstreckendes Langloch 52a4 ein und zwar derart, dass er in Ansicht gemäß Fig. 6 bei einem Verschwenken der Verschwenkachse 52a1 entgegen des Uhrzeigersinns erst nach einem Schwenkwinkel α in Anlage mit der Schwenkhülse 52a2 tritt und infolgedessen dann auf dem restlichen Schwenkweg auch das bewegliche Weichenelement 52a mitnimmt. Auch bei einer Verdrehung der Schwenkachse 52a1 in Ansicht gemäß Fig. 6 im Uhrzeigersinn überstreicht der Stift 52a3 zunächst den Freiwinkel α, bevor er in Anlage und somit Mitnahmeeingriff mit der Lagerhülse 52a2 des beweglichen Weichenelements 52a gelangt und dieses dann wiederum auf dem weiteren Schwenkweg wieder mitnimmt.

Der Gesamtschwenkwinkel der Schwenkachse 52a1 und somit des beweglichen Weichenelements 58a wird bei einem Verschwenken in Ansicht gemäß Fig. 6 entgegen des Uhrzeigersinns durch das Zusammenwirken einer Anschlagfläche 52a5 der Schwenkhülse 52a2 mit einem Transportweg-festen Anschlagelement 62 und bei einem Verschwenken im Uhrzeigersinn durch das Zusammenwirken einer Anschlagfläche 52a6 mit dem Anschlagelement 62 begrenzt.

Obgleich dies in den Darstellungen gemäß Fig. 4 und 5 nicht zu erkennen ist, ist an dem der oberen Laufbahn 22 zugeordneten beweglichen Weichenelement 52a auch ein Abschnitt der Stützbahn 20 ausgebildet.

Nachzutragen ist noch, dass die Rollbahnen, nämlich die Stützbahn 20 und die Laufbahnen 22 und 24 entweder unmittelbar als Oberflächen der Profilelemente der oberen Transportwegeinheit 16 und der unteren Transporhnregeinheit 18 ausgebildet, oder an diesen Profilelementen, wie dies in der beigefügten Zeichnung dargestellt ist, als gesonderte Rollbahnelemente vorgesehen sein können.

## Patentansprüche

1. Fördervorrichtung (10), umfassend:
- einen Transportweg (12), welcher wenigstens einen gekrümmten Abschnitt (12a) mit einer Krümmungsachse und einem Krümmungsradius aufweist,
wobei diesem Transportweg (12) eine längs des Transportwegs (12) weisende Förderrichtung (L), eine parallel zur Krümmungsachse verlaufende Hochrichtung (H) und eine sowohl zur Förderrichtung (L) als auch zur Hochrichtung (H) orthogonal verlaufende Querrichtung (Q) zuordenbar sind,
wobei der Transportweg (12) ferner zwei in Hochrichtung (H) übereinander und mit einem vorbestimmten Abstand voneinander verlaufende Laufbahnen (22, 24) aufweist, und
- einen Transportwagen (14) mit wenigstens drei Rollen (32, 34, 36),
wobei jeder der Laufbahnen (22, 24) wenigstens eine Laufrolle (34, 36) mit im Wesentlichen in Hochrichtung (H) verlaufender Drehachse (A, B) zugeordnet ist, und
wobei wenigstens einer der Laufbahnen (22, 24) eine weitere Laufrolle (34, 36) mit im Wesentlichen in Hochrichtung (H) verlaufender Drehachse (A, B) zugeordnet ist, welche von der derselben Laufbahn (22, 24) zugeordneten einen Laufrolle (34, 36) in Förderrichtung (L) beabstandet angeordnet ist,
**dadurch gekennzeichnet, dass** die Drehachsen (A, B) der beiden Laufrollen (34, 36) zueinander fluchtend angeordnet sind, und dass dann, wenn beiden Laufbahnen (22, 24) jeweils eine weitere Laufrolle (34, 36) zugeordnet ist, die Drehachsen (A, B) dieser beiden weiteren Laufrollen (34, 36) ebenfalls zueinander fluchtend angeordnet sind.

2. Fördervorrichtung nach Anspruch 1,
**dadurch gekennzeichnet, dass** wenigstens eine Stützrolle (32) vorgesehen ist, welche vorzugsweise eine im Wesentlichen in Querrichtung (Q) verlaufende Drehachse (C) aufweist.

3. Fördervorrichtung nach Anspruch 2,
**dadurch gekennzeichnet, dass** wenigstens eine Stützrolle (32) einer der Laufrollen (34) als Nachlaufrolle zugeordnet ist.

4. Fördervorrichtung nach Anspruch 2 oder 3,
**dadurch gekennzeichnet, dass** die Drehachse (C) der Stützrolle (32) um eine im Wesentlichen in Hochrichtung (H), vorzugsweise zur Drehachse (A) der zugeordneten Laufrolle (34) im Wesentlichen parallel, verlaufende Achse schwenkbar ist.

5. Fördervorrichtung nach Anspruch 4,
**dadurch gekennzeichnet, dass** die Stützrolle derart bemessen ist, dass sie auf der ihr zugeordneten Rollbahn um 360° verschwenken kann.

6. Fördervorrichtung nach einem der Ansprüche 3 bis 5,
**dadurch gekennzeichnet, dass** die Stützrolle derart bemessen ist, dass sie in Hochrichtung im Wesentlichen vollständig unterhalb der ihr zugeordneten Laufrolle anordenbar ist.

7. Fördervorrichtung nach einem der Ansprüche 1 bis 6,
**dadurch gekennzeichnet, dass** wenigstens eine der Rollen (32, 34, 36) als Scheibenrolle ausgebildet ist.

8. Fördervorrichtung nach einem der Ansprüche 1 bis 7,
**dadurch gekennzeichnet, dass** wenigstens eine der Rollen als Kugelrolle ausgebildet ist.

9. Fördervorrichtung nach einem der Ansprüche 1 bis 8,
**dadurch gekennzeichnet, dass** die Laufbahnflächen der beiden Laufbahnen (22, 24) in einander entgegengesetzte Richtungen (N₁, N₂) weisen.

## Claims

1. A conveyor device (10) comprising:
- a transport path (12) which has at least one curved section (12a) with an axis of curvature and a radius of curvature,
wherein this transport path (12) can be associated with a conveyor direction (L) pointing along the transport path (12), a vertical direction (H) extending parallel to the axis of curvature and a transverse direction (Q) extending orthogonally both relative to the conveyor direction (L) and to the vertical direction (H),
wherein the transport path (12) also has two tracks (22,24) extending one above the other in a vertical direction and at a predetermined distance apart, and
- a transport carriage (14) with at least three rollers (32,34,36),
wherein each of the tracks (22,24) is associated with at least one roller (34,36) with an axis of rotation (A,B) extending substantially in the vertical direction (H), and
wherein at least one of the tracks (22,24) is associated with a further roller (34,36) with an axis of rotation (A,B) extending substantially in the vertical direction (H), which is arranged spaced apart in the conveyor direction (L) from the roller (34,36) associated with the same track (22,24),
**characterised in that** the axes of rotation (A,B) of the two rollers (34,36) are arranged in alignment with one another, and **in that** when a further roller (34,36) is respectively associated with the two tracks (22,24), the axes of rotation (A,B) of these two further rollers (34,36) are likewise arranged in alignment with one another.

2. A conveyor device according to Claim 1,
**characterised in that** at least one support roller (32) is provided, which preferably has an axis of rotation (C) extending substantially in the transverse direction (Q).

3. A conveyor device according to Claim 2,
**characterised in that** at least one support roller (32) is assigned to one of the rollers (34) as a follower roller.

4. A conveyor device according to Claim 2 or 3,
**characterised in that** the axis of rotation (C) of the support roller (32) is pivotable about an axis which substantially in the vertical direction (H) extends substantially parallel, preferably relative to the axis of rotation (A) of the associated roller (34).

5. A conveyor device according to Claim 4,
**characterised in that** the support roller is of such dimensions that it can pivot through 360° on the roller track associated therewith.

6. A conveyor device according to any one of Claims 3 to 5,
**characterised in that** the support roller is of such dimensions that it can be arranged in a vertical direction substantially completely below the roller associated therewith.

7. A conveyor device according to any one of Claims 1 to 6,
**characterised in that** at least one of the rollers (32,34,36) is in the form of a disc roller.

8. A conveyor device according to any one of Claims 1 to 7,
**characterised in that** at least one of the rollers is in the form of a spherical roller.

9. A conveyor device according to any one of Claims 1 to 8,
**characterised in that** the track surfaces of the two tracks (22,24) point in mutually opposing directions (N₁,N₂).

## Revendications

1. Dispositif de transport (10), comportant
- une voie de transport (12), qui comporte au moins un tronçon courbe (12a) avec un axe de courbure et un rayon de courbure,
sachant qu'à ladite voie de transport (12) sont associées une direction de transport (L) orientée le long de la voie de transport (12), une direction verticale (H) orientée parallèlement à l'axe de courbure, et une direction transversale (Q) orientée orthogonalement à la direction de transport (L) et à la direction verticale (H),
la voie de transport (12) comportant en outre deux voies de roulement (22, 24) superposées dans la direction verticale (H) et situées à une distance prédéterminée l'une de l'autre, et
- un chariot de transport (14) avec au moins trois galets (32, 34, 36),
sachant qu'à chacune des voies de roulement (22, 24) est associé au moins un galet de roulement (34, 36) avec un axe de rotation (A, B) orienté sensiblement dans la direction verticale (H), et
à au moins une des voies de roulement (22, 24) est associé un autre galet de roulement (34, 36) avec un axe de rotation (A, B) orienté sensiblement dans la direction verticale (H), lequel est situé à distance dans la direction de transport (L) de l'un des galets de roulement (34, 36) associé à la même voie de roulement (22, 24),
**caractérisé en ce que** les axes de rotation (A, B) des deux galets de roulement (34, 36) sont alignés l'un avec l'autre, et **en ce que**, lorsque respectivement un autre galet de roulement (34, 36) est associé aux deux voies de roulement (22, 24), les deux axes de rotation (A, B) des deux autres galets de roulement (34, 36) sont également alignés l'un avec l'autre.

2. Dispositif de transport selon la revendication 1, **caractérisé en ce qu'**il est prévu au moins un galet d'appui (32), qui comporte de préférence un axe de rotation (C) orienté sensiblement dans la direction transversale (Q).

3. Dispositif de transport selon la revendication 2, **caractérisé en ce qu'**au moins un galet d'appui (32) est associé en tant que galet suiveur à un des galets de roulement (34).

4. Dispositif de transport selon la revendication 2 ou 3, **caractérisé en ce que** l'axe de rotation (C) du galet d'appui (32) est apte à pivoter autour d'un axe orienté sensiblement dans la direction verticale (H), de préférence sensiblement parallèlement à l'axe de rotation (A) du galet de roulement (34) associé.

5. Dispositif de transport selon la revendication 4, **caractérisé en ce que** le galet d'appui est dimensionné de telle sorte qu'il peut pivoter sur 360° sur la voie de roulement qui lui est associé.

6. Dispositif de transport selon l'une quelconque des revendications 3 à 5, **caractérisé en ce que** le galet d'appui est dimensionné de telle sorte qu'il peut être disposé dans la direction verticale sensiblement totalement en dessous du galet de roulement qui lui est associé.

7. Dispositif de transport selon l'une quelconque des revendications 1 à 6, **caractérisé en ce qu'**au moins un des galets (32, 34, 36) est réalisé sous forme de poulie.

8. Dispositif de transport selon l'une quelconque des revendications 1 à 7, **caractérisé en ce qu'**au moins un des galets est réalisé sous forme de roulette.

9. Dispositif de transport selon l'une quelconque des revendications 1 à 8, **caractérisé en ce que** les surfaces de roulement des deux voies de roulement (22, 24) sont orientées dans des directions opposées (N₁, N₂).
